# EUROPEAN PATENT SPECIFICATION

(11) **EP 3 395 618 B1**
(45) Date of publication and mention of the grant of the patent: **27.11.2019**
(21) Application number: 17382227.1
(22) Date of filing: 27.04.2017
(51) Int. Cl.: B60R 13/08, B62D 25/06

(54) **VIBRATION DAMPING ELEMENT FOR VEHICLE ROOF SHEET AND VEHICLE ROOF SHEET WITH VIBRATION DAMPING ELEMENT**
SCHWINGUNGSDÄMPFUNGSELEMENT FÜR FAHRZEUGDACH UND FAHRZEUGDACH MIT DEM SCHWINGUNGSDÄMPFUNGSELEMENT
ÉLÉMENT D'AMORTISSEMENT DE VIBRATIONS POUR FEUILLE DE TOIT DE VÉHICULE ET FEUILLE DE TOIT DE VÉHICULE DOTÉE D'UN ÉLÉMENT D'AMORTISSEMENT DE VIBRATIONS

(43) Date of publication of application: 31.10.2018
(73) Proprietor: Grupo Antolin-Ingenieria, S.A., 09007 Burgos (ES)
(72) Inventor: PASCUAL GARCÍA, JOSE LUIS, 09007 Burgos (ES); SANCHEZ LITE, ALBERTO, 09007 Burgos (ES)
(74) Representative: Capitán García, Maria Nuria

(56) References cited:
- EP-A1- 1 306 205
- EP-A2- 0 993 935
- JP-A- S57 198 173
- US-A1- 2004 235 376

## Description

### TECHNICAL FIELD OF THE INVENTION

This invention relates to a roof sheet for vehicles with a damping vibration element, particularly for vehicles with internal combustion engines comprising a reinforcing element and a fixing system for fixing the reinforcing element to the roof bodywork of the vehicle that improves the vibratory and acoustic behaviour of the roof sheet of the vehicle.

### BACKGROUND OF THE INVENTION

When a vehicle is running many modes of the bodywork are excited mainly due to the operation of the vehicle's internal combustion engine, but also due to the vehicle's movement.

Said excitation causes the vibration of different areas of the bodywork of the vehicle producing noises inside the cabin of the vehicle.

Particularly the part of the bodywork corresponding to the roof is typically made from an essentially flat sheet of large dimensions that is joined to the vehicle chassis only via the contour of said flat sheet.

As a result of said particular configuration of the roof sheet, its structure is easily excitable and also exhibits an amplification effect when its resonance frequencies are excited.

On the other hand, the proximity of the roof sheet to the ears of the vehicle occupants favours perception of the noises produced by the vibrations of the roof sheet, making the problem worse.

One way of attenuating the noises caused by the vibrations from the roof sheet consists in modifying the modes of vibration of the roof sheet so that the resonance frequencies of the various sources do not coincide, or do so to a lesser extent, with the excitation modes of the roof sheet generated in the vehicle. Thee excitation of the roof sheet is thereby decreased with the resulting decrease in noise levels.

In order to achieve this objective we can either modify the mass or the stiffness of the roof sheet.

In order to increase the mass addition of roofing felt to the surface of the roof sheet is already known. Said solution is not very advantageous because although it solves the vibrational and acoustic problem, it increases the total weight of the vehicle, and furthermore at the highest part, raising the centre of gravity and thus affecting vehicle stability when running.

In order to increase the stiffness of the roof sheet solutions are known in which metal cross members are fixed along the surface of the roof. This solution increases the weight of the assembly, and a special design is necessary for each model of vehicle; therefore it is expensive and also reduces the useful space inside the cabin of the vehicle. One example of this solution is described in patent JP2008006951.

With the objective of increasing the stiffness of the roof sheet in a more inexpensive manner, solutions are known in which sandwich-type structures are fixed thereon. These structures normally comprise plastic materials such as may be the combination of polyurethane foams, resins, and reinforcing fibres, for example fibreglass. These are advantageous because they contribute stiffness to the roof sheet without considerably increasing its weight and at a low cost. One example of this solution is described in patent EP0993935 which discloses a roof sheet with damping vibration element according to the preamble of claim 1.

This type of solutions focuses mainly on the composition and the relative arrangement of the different layers forming the structure of the sandwich.

Therefore, although this type of solutions is considered one of the most advantageous, none of them deals with the manner of efficiently transmitting the stiffness to the roof sheet.

In view of the above, the subject matter of the invention consists in a roof sheet for vehicles with a damping vibration element, comprising a reinforcing element and fixing means, that allow transmitting the stiffness provided by the reinforcing element via the fastening means in an efficient manner in order to improve the vibrational and acoustic behaviour of the roof sheet of the vehicle.

### DESCRIPTION OF THE INVENTION

The present invention is established and characterised in the independent claim 1, while the dependent claims describe additional characteristics thereof.

First of all, the configuration of the invention comprises a damping vibration element capable of transmitting stiffness to the roof sheet while hardly increasing the weight of the vehicle, hardly reducing the space inside the cabin of the vehicle, and at a low cost.

Second, the special configuration of the fixing means of the damping vibration element to the roof sheet, defined by a combination of adhesive coupling lines arranged in the direction of travel of the vehicle and their special relative arrangement regarding the damping vibration element and the roof sheet, allows transmitting the stiffness from one element to the other in a much more effective manner than in common systems known in state of the art, which are more focused on the configuration of the reinforcing element and its composition than in the way it is fixed to the roof sheet.

### DESCRIPTION OF THE FIGURES

This specification is supplemented with a set of figures illustrating the preferred embodiment, which are in no way intended to limit the invention.
Figure 1 shows a plan view of the vehicle chassis seen from the inside of the vehicle according to a first embodiment of the invention.
Figure 2 shows a plan view of the vehicle chassis seen from the inside of the vehicle according to a second embodiment of the invention.
Figure 3 shows a plan view of a damping vibration element with fixing means to the roof sheet according to an embodiment of the invention.
Figure 4 shows a plan view of a damping vibration element with fixing means to the roof sheet according to another embodiment of the invention.
Figure 5 shows a schematic view of the AA cross-section shown in figure 3, corresponding to a cross section of the damping vibration element.

### DETAILED DESCRIPTION OF THE INVENTION

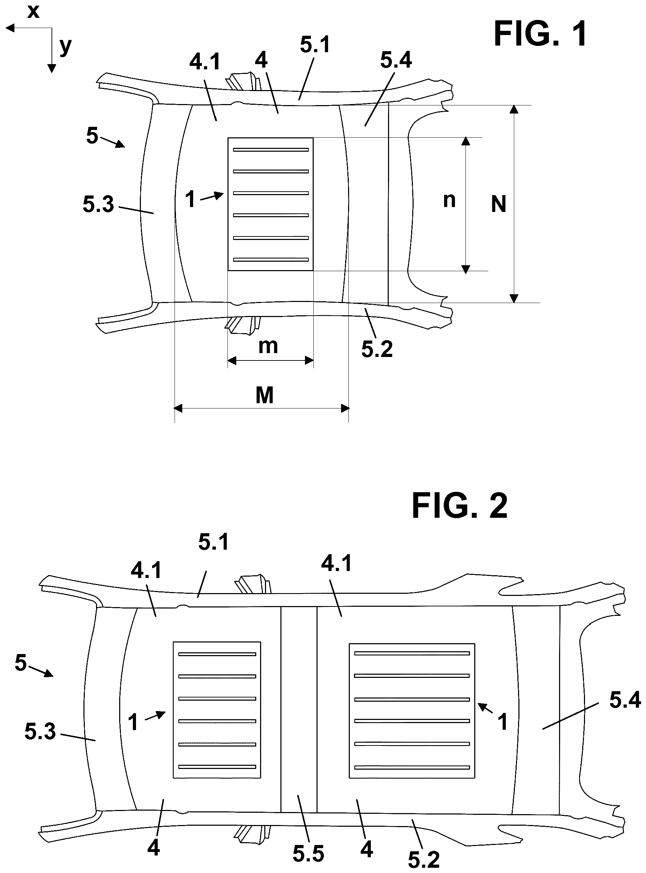

Figure 1 shows a roof sheet (4) for vehicles with a damping vibration element (1) according to the invention, wherein the damping vibration element (1) is joined to the roof sheet (4).

The roof sheet (4) comprises a metal sheet that extends from the front of the vehicle to the back thereof attached to the vehicle chassis (5) via its contour, particularly joined to the longitudinal beams (5.1, 5.2) and the cross beams (5.3, 5.4) of the vehicle chassis (5).

Said joining of the roof sheet (4) via its contour to the vehicle chassis (5) defines a free surface (4.1), that is, a surface corresponding to the part of the roof sheet (4) that is not attached to the vehicle chassis (5) that exhibits an amplification effect when its resonance frequencies are excited.

Said free surface (4.1) has a long dimension, particularly a dimension "M" in the travel direction of the vehicle or direction x of the vehicle and a dimension "N" in a direction perpendicular to the direction of travel of the vehicle, or direction y of the vehicle.

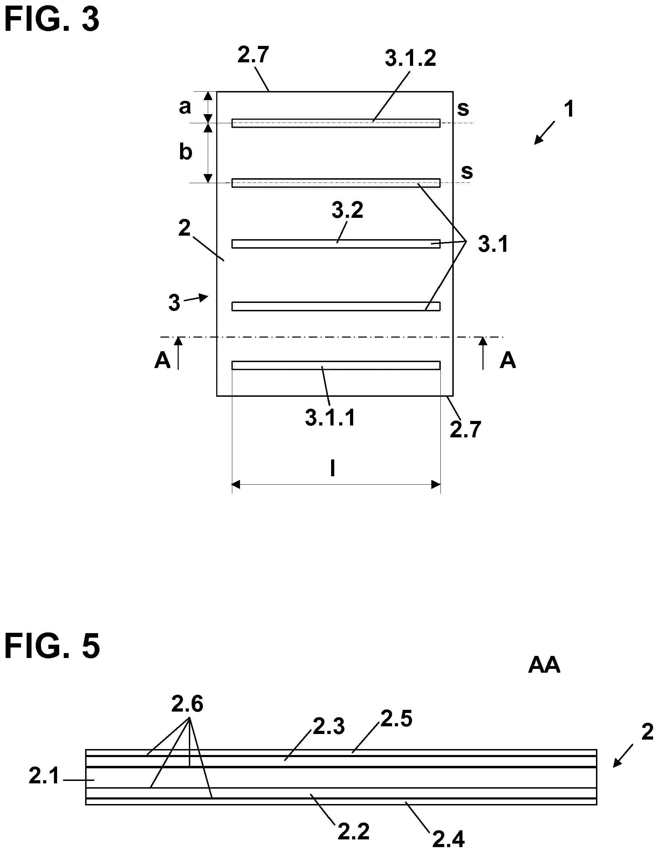

As can be seen in more detail in figures 3, 4 and 5, the damping vibration element (1) comprises a reinforcing element (2) and fixing means (3) of the reinforcing element (2) to the roof sheet (4).

The reinforcing element (2) has a sandwiched structure, that is, it is formed by an assembly of overlapping layers joined to one another. Particularly such layers comprise:
∘ a carrier (2.1) formed by a sheet of polyurethane foam (PU),
∘ a first layer of reinforcing fibres (2.2) on a first face of the carrier (2.1),
∘ a second layer of reinforcing fibres (2.3) on a second face of the carrier (2.1),
∘ a first covering layer (2.4) on the first layer of reinforcing fibres (2.2),
∘ a second covering layer (2.5) on the second layer of reinforcing fibres (2.3),
∘ an adhesive (2.6) to join the carrier (2.1), the first layer of reinforcing fibres (2.2), the second layer of reinforcing fibres (2.3), the first covering layer (2.4) and the second covering layer (2.5).

The reinforcing element (2) comprises a surface defined by a dimension "m" along the direction of travel of the vehicle or direction x of the vehicle, and a dimension "n" along the direction perpendicular to the direction of travel of the vehicle or direction y of the vehicle. Said reinforcing element (2) may have, for example, a rectangular shape.

The fixing means (3) of the reinforcing element (2) to the roof sheet (4) comprise at least five adhesive coupling lines (3.1) parallel to the direction of travel of the vehicle and joined to one side of the reinforcing element (2).

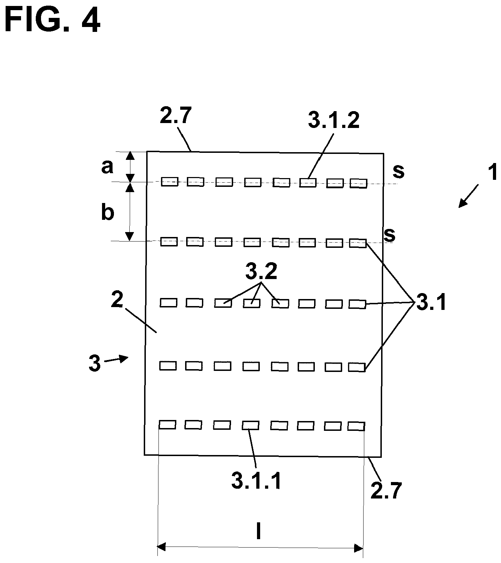

The adhesive coupling lines (3.1) may comprise:
- a single adhesive element (3.2) forming a continuous adhesive coupling line (3.1) along its entire length as shown in figure 3,
- an assembly of adhesive elements (3.2) forming a discontinuous adhesive coupling line (3.1) along its entire length as shown in figure 4, or
- a combination of the previous configurations according to an embodiment not shown in the figures.

On the other hand, such adhesive coupling lines (3.1) can have, for example, a circular cross section with a lace-like shape or a rectangular cross section with a ribbon-like shape. In addition they can have a carrier for the adhesive coupling line (3.1) such as may be a double-sided adhesive tape.

The adhesive coupling lines (3.1) have a particular distribution along one of the sides of the reinforcing element (2). Particularly said distribution comprises a first adhesive coupling line (3.1.1) and a second adhesive coupling line (3.1.2) located close to the side edges (2.7) of the reinforcing element (2), wherein said side edges (2.7) are parallel to the direction of travel of the vehicle or direction x of the vehicle.

The remaining adhesive coupling lines (3.1) forming the fixing means (3) are distributed between the first adhesive coupling line (3.1.1) and the second adhesive coupling line (3.1.2).

On the other hand, the first adhesive coupling line (3.1.1) and the second adhesive coupling line (3.1.2) are separated from the side edges (2.7) of the reinforcing element (2) by a dimension "a" of less than 50 mm. Moreover, two contiguous adhesive coupling lines (3.1) are separated by a dimension "b" of less than 120 mm and more than 80 mm. Such dimensions are considered from the longitudinal axis "s" of such adhesive coupling lines (3.1) as shown in figure 3.

On the other hand, the adhesive coupling lines (3.1) have a length "1" of more than 50% of dimension "m" of the reinforcing element (2), and in one particular case may comprise a length "1" of more than 70% of dimension "m".

As can be seen in figure 1 the dimension "m" of the reinforcing element (2) is more than 50% of the dimension "M" of the roof sheet (4) and the dimension "n" of the reinforcing element (2) is more than 50% of the dimension "N" of the roof sheet (4).

As shown in figure 1 the roof sheet (4) attached to the vehicle chassis (5) via its contour and particularly via the longitudinal beams (5.1, 5.2) and the cross beams (5.3, 5.4) defines a free surface (4.1) formed by a portion of the roof sheet (4) attached to the chassis (5) only via its contour. In this case therefore the roof sheet (4) comprises a single damping vibration element (1).

In the case shown in figure 2, the roof sheet (4) is attached to the vehicle chassis (5) via its contour and particularly to the longitudinal beams (5.1, 5.2) and via the cross beams (5.3, 5.4) located at the ends of the chassis, and due to their large dimensions, the roof sheet (4) is also attached to a central cross beam (5.5) that is part of the chassis (5).

Thus in the case shown in figure 2, the roof sheet (4) comprises two free surfaces (4.1) each formed by a portion of roof sheet (4) attached to the vehicle chassis (5) only via its contour. In this case therefore the roof sheet (4) comprises two damping vibration elements (1), each attached to each one of the free surfaces (4.1) defined in the roof sheet (4).

## Claims

1. Roof sheet (4) for vehicles with damping vibration element (1) wherein the roof sheet (4) is configured to be attached via its contour to a vehicle chassis (5) defining, said roof sheet (4), a free surface (4.1) that has a dimension M in the direction of travel of the vehicle and a dimension N in a direction perpendicular to the direction of travel of the vehicle,
wherein the damping vibration element (1) is joined to the free surface (4.1) of the roof sheet (4),
wherein the damping vibration element (1) comprises:
• a formed sandwiched reinforcing element (2) comprising:
∘ a carrier (2.1) formed by a sheet of polyurethane foam,
∘ a first layer of reinforcing fibres (2.2) on a first face of the carrier (2.1),
∘ a second layer of reinforcing fibres (2.3) on a second face of the carrier (2.1),
∘ a first covering layer (2.4) on the first layer of reinforcing fibres (2.2),
∘ a second covering layer (2.5) on the second layer of reinforcing fibres (2.3),
∘ an adhesive (2.6) to join the carrier (2.1), the first layer of reinforcing fibres (2.2), the second layer of reinforcing fibres (2.3), the first covering layer (2.4) and the second covering layer (2.5),
wherein the reinforcing element (2) has a dimension m along the direction of travel of the vehicle and a dimension n along the direction perpendicular to the direction of travel of the vehicle,
• fixing means (3) of the reinforcing element (2) to the roof sheet (4),
**characterised in that**
the fixing means (3) comprise:
∘ at least five adhesive coupling lines (3.1) parallel to the direction of travel of the vehicle and joined on one side of the reinforcing element (2), from which a first adhesive coupling line (3.1.1) and a second adhesive coupling line (3.1.2) are located close to the side edges (2.7) of the reinforcing element (2), wherein said side edges (2.7) are parallel to the direction of travel of the vehicle,
∘ the first adhesive coupling line (3.1.1) and the second adhesive coupling line (3.1.2) are separated from the side edges (2.7) of the reinforcing element (2) a distance of less than 50 mm,
∘ the separation between two contiguous adhesive coupling lines (3.1) has a dimension b of less than 120 mm and more than 80 mm,
∘ the adhesive coupling lines (3.1) have a length 1 of more than 50% of the dimension m of the reinforcing element (2)
where the dimension m of the reinforcing element (2) is more than 50% of the dimension M of the roof sheet (4) and the dimension n of the reinforcing element (2) is more than 50% of the dimension N of the roof sheet (4).

2. Roof sheet (4) for vehicles with damping vibration element (1) according to claim 1, wherein the adhesive coupling lines (3.1) comprise a single adhesive element (3.2) forming a continuous adhesive coupling line (3.1) along its length.

3. Roof sheet (4) for vehicles with damping vibration element (1) according to claim 1, wherein the adhesive coupling lines (3.1) comprise an assembly of adhesive elements (3.2) forming a discontinuous adhesive coupling line (3.1) along their length.

4. Roof sheet (4) for vehicles with damping vibration element (1) according to claim 1 wherein the adhesive coupling lines (3.1) have a length 1 of more than 70% of dimension m of the reinforcing element (2).

5. Roof sheet (4) for vehicles with damping vibration element (1) according to any of claims 1-4 wherein the roof sheet (4) comprises two free surfaces (4.1) and two damping vibration elements (1) each joined to each of the free surfaces (4.1) of the roof sheet (4) .

## Patentansprüche

1. Dachblech (4) für Fahrzeuge mit Schwingungsdämpfungselement (1), wobei das Dachblech (4) eingerichtet ist, um über seine Kontur an einem Fahrzeugchassis (5) angebracht zu werden, wobei das Dachblech (4) eine freie Oberfläche (4.1) definiert, die eine Abmessung M in Fahrtrichtung des Fahrzeugs und eine Abmessung N in einer Richtung senkrecht zur Fahrtrichtung des Fahrzeugs aufweist,
wobei das Schwingungsdämpfungselement (1) mit der freien Oberfläche (4.1) des Dachblechs (4) verbunden ist,
wobei das Schwingungsdämpfungselement (1) umfasst:
• ein geformtes eingeschobenes Verstärkungselement (2), umfassend:
∘ einen Träger (2.1), der durch eine Polyurethanschaumplatte gebildet wird,
∘ eine erste Schicht aus Verstärkungsfasern (2.2) auf einer ersten Seite des Trägers (2.1),
∘ eine zweite Schicht aus Verstärkungsfasern (2.3) auf einer zweiten Seite des Trägers (2.1),
∘ eine erste Deckschicht (2.4) auf der ersten Schicht aus Verstärkungsfasern (2.2),
∘ eine zweite Deckschicht (2.5) auf der zweiten Schicht aus Verstärkungsfasern (2.3),
∘ ein Haftmittel (2.6) zum Verbinden des Trägers (2.1), der ersten Schicht aus Verstärkungsfasern (2.2), der zweiten Schicht aus Verstärkungsfasern (2.3), der ersten Deckschicht (2.4) und der zweiten Deckschicht (2.5),
wobei das Verstärkungselement (2) eine Abmessung m entlang der Fahrtrichtung des Fahrzeugs und eine Abmessung n entlang der Richtung senkrecht zur Fahrtrichtung des Fahrzeugs aufweist,
• Befestigungsmittel (3) des Verstärkungselements (2) am Dachblech (4),
**dadurch gekennzeichnet, dass**
die Befestigungsmittel (3) umfassen:
∘ mindestens fünf zur Fahrtrichtung des Fahrzeugs parallele und auf einer Seite des Verstärkungselements (2) verbundene Haftmittelverbindungslinien (3.1), von denen eine erste Haftmittelverbindungslinie (3.1.1) und eine zweite Haftmittelverbindungslinie (3.1.2) sich in der Nähe der Seitenkanten (2.7) des Verstärkungselements (2) befinden, wobei die Seitenkanten (2.7) parallel zur Fahrtrichtung des Fahrzeugs verlaufen,
∘ die erste Haftverbindungslinie (3.1.1) und die zweite Haftverbindungslinie (3.1.2) von den Seitenkanten (2.7) des Verstärkungselements (2) in einem Abstand von weniger als 50 mm getrennt sind,
∘ der Abstand zwischen zwei zusammenhängenden Haftmittelverbindungslinien (3.1) eine Abmessung b von weniger als 120 mm und mehr als 80 mm aufweist,
∘ die Haftmittelverbindungslinien (3.1) eine Länge l von mehr als 50 % der Abmessung m des Verstärkungselements (2) aufweisen
wobei die Abmessung m des Verstärkungselements (2) mehr als 50 % der Abmessung M des Dachblechs (4) beträgt und die Abmessung n des Verstärkungselements (2) mehr als 50 % der Abmessung N des Dachblechs (4) beträgt.

2. Dachblech (4) für Fahrzeuge mit Schwingungsdämpfungselement (1) nach Anspruch 1, wobei die Haftmittelverbindungslinien (3.) ein einzelnes Haftmittelelement (3.2) umfassen, das entlang seiner Länge eine durchgehende Haftmittelverbindungslinie (3.1) bildet.

3. Dachblech (4) für Fahrzeuge mit Schwingungsdämpfungselement (1) nach Anspruch 1, wobei die Haftmittelverbindungslinien (3.1) eine Anordnung von Haftmittelelementen (3.2) umfassen, die entlang ihrer Länge eine unterbrochene Haftmittelverbindungslinie (3.1) bilden.

4. Dachblech (4) für Fahrzeuge mit Schwingungsdämpfungselement (1) nach Anspruch 1, wobei die Haftmittelverbindungslinien (3.1) eine Länge l von mehr als 70 % der Abmessung m des Verstärkungselements (2) aufweisen.

5. Dachblech (4) für Fahrzeuge mit Schwingungsdämpfungselement (1) nach einem der Ansprüche 1 bis 4, wobei das Dachblech (4) zwei freie Oberflächen (4.1) und zwei Schwingungsdämpfungselemente (1) umfasst, die jeweils mit jeder der freien Oberflächen (4.1) des Dachblechs (4) verbunden sind.

## Revendications

1. Feuille de toit (4) pour véhicules avec élément d'amortissement de vibrations (1), dans laquelle la feuille de toit (4) est conçue pour être fixée par son contour à un châssis de véhicule (5), ladite feuille de toit (4) définissant une surface libre (4.1) ayant une dimension M dans le sens de déplacement du véhicule et une dimension N dans une direction perpendiculaire au sens de déplacement du véhicule,
dans laquelle l'élément d'amortissement de vibrations (1) est relié à la surface libre (4.1) de la feuille de toit (4),
dans laquelle l'élément d'amortissement des vibrations (1) comprend :
• un élément de renfort intercalé (2) comprenant :
∘ un support (2.1) constitué par une feuille de mousse polyuréthane,
∘ une première couche de fibres de renfort (2.2) sur une première face du support (2.1),
∘ une seconde couche de fibres de renfort (2.3) sur une seconde face du support (2.1),
∘ une première couche de recouvrement (2.4) sur la première couche de fibres de renfort (2.2),
∘ une seconde couche de recouvrement (2.5) sur la seconde couche de fibres de renfort (2.3),
∘ un adhésif (2.6) pour relier le support (2.1), la première couche de fibres de renfort (2.2), la seconde couche de fibres de renfort (2.3), la première couche de recouvrement (2.4) et la seconde couche de recouvrement (2.5),
dans laquelle l'élément de renfort (2) a une dimension m dans le sens de déplacement du véhicule et une dimension n dans la direction perpendiculaire au sens de déplacement du véhicule,
• des moyens de fixation (3) de l'élément de renfort (2) à la feuille de toit (4),
**caractérisée en ce que**
les moyens de fixation (3) comprennent :
∘ au moins cinq lignes de couplage adhésives (3.1) parallèles au sens de déplacement du véhicule et reliées sur un des deux côtés de l'élément de renfort (2), à partir desquelles une première ligne de couplage adhésive (3.1.1) et une seconde ligne de couplage adhésive (3.1.2) sont situées à proximité des bords latéraux (2.7) de l'élément de renfort (2), lesdits bords latéraux (2.7) étant parallèles au sens de déplacement du véhicule,
∘ la première ligne de couplage adhésive (3.1.1) et la seconde ligne de couplage adhésive (3.1.2) sont séparées des bords latéraux (2.7) de l'élément de renfort (2) sur une distance inférieure à 50 mm,
∘ la séparation entre deux lignes de couplage adhésives (3.1) contiguës a une dimension b inférieure à 120 mm et supérieure à 80 mm,
∘ les lignes de couplage adhésives (3.1) ont une longueur l supérieure à 50 % de la dimension m de l'élément de renfort (2)
la dimension m de l'élément de renfort (2) étant supérieure à 50 % de la dimension M de la feuille de toit (4) et la dimension n de l'élément de renfort (2) étant supérieure à 50 % de la dimension N de la feuille de toit (4).

2. Feuille de toit (4) pour véhicules avec élément d'amortissement de vibrations (1) selon la revendication 1, dans laquelle les lignes de couplage adhésives (3.1) comprennent un seul élément adhésif (3.2) constituant une ligne de couplage adhésive (3.1) continue sur sa longueur.

3. Feuille de toit (4) pour véhicules avec élément d'amortissement de vibrations (1) selon la revendication 1, dans laquelle les lignes de couplage adhésives (3.1) comprennent un ensemble d'éléments adhésifs (3.2) constituant une ligne de couplage adhésive (3.1) discontinue sur leur longueur.

4. Feuille de toit (4) pour véhicules avec élément d'amortissement de vibrations (1) selon la revendication 1, dans laquelle les lignes de couplage adhésives (3.1) ont une longueur l supérieure à 70 % de la dimension m de l'élément de renfort (2).

5. Feuille de toit (4) pour véhicules avec élément d'amortissement des vibrations (1) selon l'une quelconque des revendications 1 à 4, dans laquelle la feuille de toit (4) comprend deux surfaces libres (4.1) et deux éléments d'amortissement de vibrations (1) reliés chacun à chacune des surfaces libres (4.1) de la feuille de toit (4).
